# EUROPÄISCHE PATENTSCHRIFT

(11) **EP 1 500 363 B1**
(45) Veröffentlichungstag und Bekanntmachung des Hinweises auf die Patenterteilung: **27.06.2007**
(21) Anmeldenummer: 04015417.1
(22) Anmeldetag: 30.06.2004
(51) Int. Cl.: A47J 45/07, A47J 45/06

(54) **Handgriff eines Haushaltsgeräts**
Handle of a domestic appliance
Poignée pour un appareil ménager

(30) Priorität: 21.07.2003 DE 10333125
(43) Veröffentlichungstag der Anmeldung: 26.01.2005
(73) Patentinhaber: BSH Bosch und Siemens Hausgeräte GmbH, 81739 München (DE)
(72) Erfinder: Kramer, Siegmund, 83417 Kirchanschöring (DE); Mühlbacher, Richard, 83224 Grassau (DE); Steffl, Michael, 83250 Marquartstein (DE)

(56) Entgegenhaltungen:
- EP-A- 1 051 943
- EP-A- 1 177 754
- DE-U- 8 915 936
- US-A- 4 982 869

## Beschreibung

Die vorliegende Erfindung betrifft einen Handgriff für ein Haushaltsgerät bzw. einen Handgriff eines Haushaltsgeräts, insbesondere für einen Behälter für Flüssigkeiten, mit den Merkmalen des Oberbegriffs des Patentanspruchs 1.

Haushaltsgeräte in Gestalt von Behältern für Flüssigkeiten sind in unterschiedlichen Formen bekannt, beispielsweise als Wärmeisoliergefäße, als Wasserkocher, als Karaffen oder dergleichen. Ein Handgriff ist üblicherweise an einem oberen Bereich des Gefäßes befestigt und verläuft in vertikaler Richtung, so dass das Gefäß zum Ausschütten der darin befindlichen Flüssigkeit oder zum Halten gehandhabt werden kann. Der Handgriff kann ggf. einen weiteren Befestigungspunkt in einem mittleren oder unteren Bereich des Gefäßes ausweisen, was jedoch nicht unbedingt erforderlich ist. Bei einem nur an einem oberen Bereich des Behälters befestigten Handgriff muss dieser eine ausreichende Formsteifigkeit aufweisen, um auch bei gefülltem Behälter bzw. Gefäß keine Verformung zu zeigen. Zudem muss die obere Befestigungsstelle ausreichend stabil ausgeführt sein, damit der Handgriff dort nicht abknicken kann. Dies betrifft insbesondere Handgriffe aus Kunststoff.

Derartige Wärmeisoliergefäße mit einem Handgriff, der an beiden Enden mit der Kanne verschraubt ist, sind beispielsweise aus der DE 14 542 27 A1, aus der DE 19 011 51 U1 und aus der DE 19 015 14 U1 bekannt. Wärmeisoliergefäße, bei denen der Handgriff nur in einem oberen Bereich an einem Behälter befestigt ist, so dass der Griff ein freies unteres Ende aufweist, sind bspw. aus der DE 72 122 42 U1 und aus der DE 84 119 95 U1 bekannt. Diese bekannten Handgriffe sind jeweils einteilig ausgebildet und können entweder massiv oder teilweise hohl ausgeführt sein. Bei bekannten Geräteausführungen besteht der Griff oftmals aus einem Griffunterteil, der meist einstückig mit dem Behälter ausgebildet, bspw. in einem einzigen Gießvorgang angespritzt ist. Auf diesem Griffunterteil wird anschließend ein Griffoberteil montiert, der üblicherweise als Abdeckung ausgebildet ist und bspw. einen halbrundförmigen Querschnitt aufweisen kann. Eine einfache Vormontage ist bei einer solchen Ausführung meist nicht möglich, so dass die Komponenten einzeln montiert werden müssen.

Ein einteiliger Handgriff eines Haushaltsgeräts mit einem C-förmigen Griffteil, der in einem betriebsgemäßen Greifbereich verstärkt und an einem oberen und einem unteren Ende am Haushaltsgerät befestigt ist, ist weiterhin aus der DE 196 38 662 A1 bekannt. Der Griffteil ist im Greifbereich hohl und im Wesentlichen geschlossen. Der Griffteil wird durch einen ersten und einen zweiten Teilkörper gebildet, die miteinander verbunden und aneinander klappbar sind.

Der vorliegenden Erfindung liegt die Aufgabe zu Grunde, einen Handgriff für ein Haushaltsgerät, insbesondere für einen Behälter für Flüssigkeiten zur Verfügung zu stellen, der bei gewichtsparender Bauweise eine möglichst hohe Formsteifigkeit aufweist.

Diese Aufgabe wird mit dem Gegenstand des unabhängigen Patentanspruchs gelöst. Merkmale vorteilhafter Weiterbildungen ergeben sich aus den abhängigen Ansprüchen.

Ein erfindungsgemäßer Handgriff für ein Haushaltsgerät weist ein im Wesentlichen geschlossenes und hohles Griffteil auf, das mit versteifenden Verstrebungen versehen ist. Insbesondere bei einer Befestigung des Handgriffs am Behälter mit nur einer Verbindungsstelle treten bei einer Handhabung eines schweren, bspw. mit Wasser gefüllten Behälters hohe Belastungen auf, welche aufgrund der Verstrebungen nicht zu einer stärkeren Durchbiegung des Handgriffs führen. Der Handgriff besteht aus zwei Griffhälften bzw. Teilkörpern, die jeweils eine innere Verstrebung aufweisen, so dass die beiden Griffhälften im miteinander verbundenen Zustand einen stabilen Handgriff zur Handhabung des Behälters bilden. Die zweiteilige Ausführung ist notwendig, da ansonsten die Verstrebungen kaum oder nur unter erheblichem Aufwand in den Hohlkörper des Griffteils eingebracht werden könnten.

Die beiden Griffhälften können insbesondere aus Kunststoff oder Leichtmetallspritzguss bestehen und im miteinander verbundenen Zustand stabil miteinander verrastet sein. Durch die innere Verstrebung und die formschlüssig und kraftschlüssig miteinander verrastbare Verbindung der beiden Griffhälften ist eine sehr stabile Griffstruktur gebildet, die auch bei gefüllten Behälter und bei einer Ausführung des Griffs mit relativ dünnen Wandstärken nicht zu einer Verformung führen kann. Die Herstellung der beiden Teilkörper im Spritzgießverfahren ermöglicht erst die problemlose Gestaltung der inneren Verstrebungen, da auf diese Weise kaum Hinterschnitte der Gussform notwendig sind. Durch die form- und kraftschlüssige Verbindung der beiden Griffhälften wird der Hohlraum des Griffteils gebildet, der die gewünschte Formsteifigkeit im Betrieb aufweist.

Der Handgriff kann an der Verbindungsstelle insbesondere mit dem Behälter verschraubt und/oder verrastet sein. Eine weitere Ausgestaltung der Erfindung kann vorsehen, dass der Handgriff einen längeren Verbindungsabschnitt aufweist, der entlang der Behälterwand nach unten führt und vorzugsweise bündig mit dieser abschließt und mit der Behälterwand verbindbar ist. Dieser Verbindungsabschnitt kann insbesondere beim Einsetzen des Griffs in eine entsprechende Vertiefung an der Behälterwand eingefügt werden, so dass der Griff in montierten Zustand bündig an der Behälterwand aufliegt.

Auch der Verbindungsabschnitt kann in gleicherweise wie der Handgriff zweiteilig ausgeführt sein, wobei die beiden Teile vorzugsweise durch Klips- oder Rastverbindungen formschlüssig und kraftschlüssig miteinander verbindbar sind. Durch die Gestaltung eines Übergangs zwischen Handgriff und Verbindungsabschnitt kann eine weitere Versteifung des Handgriffs erreicht werden, sodass dessen Formsteifigkeit jederzeit gegeben ist. Der an der Behälterwand nach unten reichende Verbindungsabschnitt bildet eine Abstützung des Handgriffs gegen die Außenwand des Behälters.

Die erfindungsgemäße Gestaltung des Handgriffs ermöglicht dessen Fertigung und Vormontage als komplette Unterbaugruppe bzw. als Modul, das ggf. noch einen elektrischen Schalter mitsamt dessen Verkabelung aufweisen kann. Die beiden Griffhälften werden mit Hilfe von Rasthaken aus Kunststoff zusammen gefügt, wodurch auch die Verkabelung des Schalters im Bereich des Verbindungsabschnitts positioniert wird, was bspw. mit Hilfe von geeigneten Ösen unterstützt werden kann. Die dadurch gebildete Unterbaugruppe "Griff" wird mit Hilfe von Haken an der Behälterwand eingehängt und ggf. dort verrastet. Ein Gegenstück im Inneren des Behälters kann anschließend mit dem Griff verschraubt werden, vorzugsweise an der oberen Verbindungsstelle, wodurch eine stabile Verbindung hergestellt wird, die einen Formschluss sowie einen Kraftschluss zwischen Behälter und Handgriff aufweist. Die Griffhälften sind auch unter höherer Belastung auf Grund der ineinander greifenden geometrischen Formen nicht gegeneinander verschiebbar.

Die Erfindung wird nachfolgend anhand eines bevorzugten Ausführungsbeispiels unter Bezugnahme der beiliegenden Zeichnungen näher erläutert. Dabei zeigt:
Figur 1 einen Wasserkocher in schematischer Perspektivansicht,
Figur 2 einen Detailausschnitt eines Handgriffs des Wasserkochers gemäß Figur 1,
Figur 3 einen Längsschnitt des Handgriffs entlang der Linie III-III der Figur 2 und
Figur 4 einen perspektivischen Teilschnitt des am Wasserkocher befestigten Handgriffs.

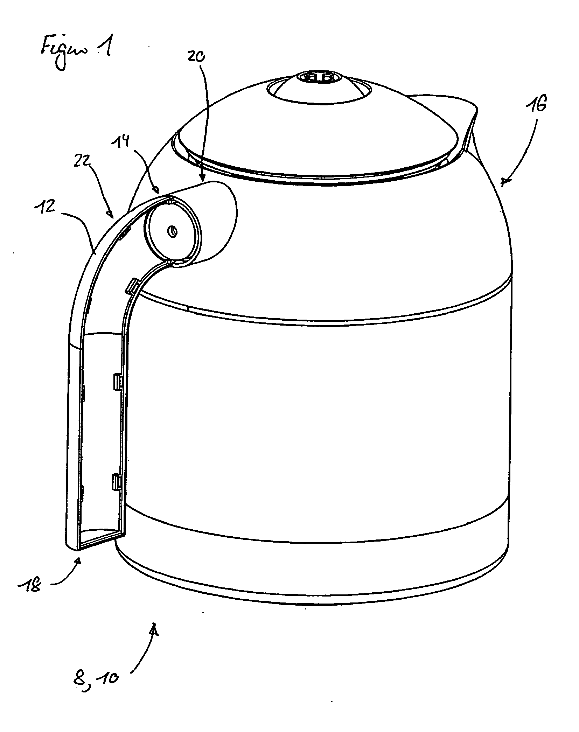

Der erfindungsgemäße Handgriff für ein Haushaltsgerät wird in den Figuren 1 bis 4 am Beispiel eines Handgriffs für einen Wasserkocher 8 näher erläutert. Ein solcher Wasserkocher 8 entsprechend Figur 1 weist üblicherweise einen von oben öffenbaren und mit einem oberen Ausguss versehenen kannen- bzw. karaffenartigen Behälter 10 aus Kunststoff auf, an dem wenigstens ein Handgriff 12 befestigt ist, der eine vertikale Längserstreckungsrichtung aufweist. Der Handgriff 12 ist zumindest mit einem oberen Ende 14 an einem oberen Bereich 16 des Behälters 10 befestigt. Der Handgriff 12 kann wahlweise auch mit seinem unteren Ende 18 am Behälter 10 befestigt sein. Im gezeigten Ausführungsbeispiel weist der Handgriff 12 jedoch nur eine obere Befestigung auf, so dass er unten ein freies Ende 18 aufweist. Da derartige Handgriffe 12 normalerweise aus Kunststoff bestehen, ist sowohl die Verbindungsstelle 20 der oberen Befestigung am Behälter 10 wie auch insbesondere der obere gekrümmte Abschnitt 22 einer teilweise erheblichen Biegebelastung ausgesetzt. Dieser Biegebelastung ist der Handgriff 12 insbesondere bei vollem Behälter 10 ausgesetzt.

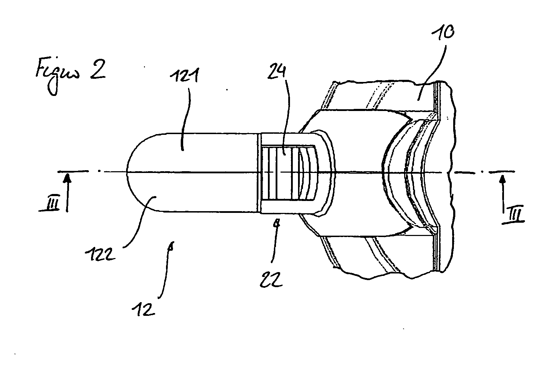

Da der Handgriff 12 üblicherweise nicht massiv, sondern geschlossen und hohl ausgebildet ist, besteht er im gezeigten Ausführungsbeispiel aus zwei in vertikaler Richtung geteilten Teilkörpern 121 und 122, welche form- und kraftschlüssig miteinander verbindbar sind. Bei miteinander verbundenen Teilkörpern 121, 122 weist der Handgriff 12 eine geschlossene Struktur mit innerem Hohlraum 123 auf. Figur 2 verdeutlicht in einer Draufsicht von oben den in vertikaler Richtung teilbaren Handgriff 12, der am oberen gekrümmten Abschnitt 22 ggf. einen Schalter 24 aufweisen kann, mit dem eine elektrische Heizeinrichtung (nicht dargestellt) im inneren unteren Bereich des Behälters 10 aktiviert werden kann.

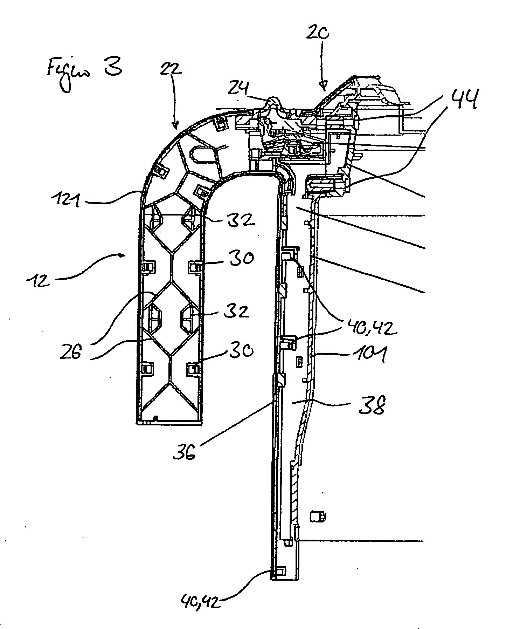

Figur 3 verdeutlicht einen Längsschnitt des Handgriffs 12 entlang der Schnittlinie III-III der Figur 2. Gezeigt ist hierbei eine Draufsicht auf den ersten Teilkörper 121, von dem in dieser Ansicht der zweite Teilkörper 122 entfernt ist. Um den Handgriff 12 im montierten und zusammen gefügtem Zustand möglichst formstabil zu gestalten, ist der innere Hohlraum 123 vorzugsweise mittels Verstrebungen 26 versteift. Diese Verstrebungen 26 können beispielsweise gitternetzartig ausgebildet sein, wie dies in der Figur 3 verdeutlicht ist. Die Verstrebungen 26 erstrecken sich vorzugsweise über die gesamte Länge des Handgriffs 12 bzw. der beiden Teilkörper 121 und 122.

Zur Sicherstellung einer zuverlässigen Verbindung und einer hohen Formstabilität des Handgriffs 12 während seiner Benutzung sind jeweils an den beiden Teilkörpern 121 und 122 Rasthaken 30 sowie jeweils damit korrespondierende Aufnahmen 32 vorgesehen, die formschlüssig ineinander greifen können, so dass bei miteinander verbundenen Teilkörpern keinerlei Relativbewegungen zwischen den beiden Griffhälften ermöglicht ist. Jede Aufnahme 32 ist jeweils so gestaltet, dass der damit korrespondierende Rasthaken 30 darin formschlüssig eingreifen und anschließend dort einrasten kann. Die Aufnahmen 32 und Rasthaken 30 sind jeweils an den aneinander grenzenden Längskanten der Teilkörper 121, 122 angeordnet, wobei auf einen Rasthaken 30 jeweils in einem geringen Abstand eine Aufnahme 32 folgt. Im gezeigten Ausführungsbeispiel sind an jeder Längskante des ersten Teilkörpers 121 zwei Rasthaken 30 sowie zwei Aufnahmen 32 vorgesehen. Drei weitere Rasthaken 30 sind im oberen gekrümmten Abschnitt 22 angeordnet. Der damit verbindbare zweite Teilkörper 122 weist somit die gleiche Anzahl von Aufnahmen 32 bzw. Rasthaken 30 auf, so dass eine formstabile Verbindung zwischen den beiden Teilkörpern 121 und 122 ermöglicht ist.

Weiterhin kann der Handgriff 12 einen Verbindungsabschnitt 36 aufweisen, der bei montiertem Handgriff 12 bündig an der Behälterwand 101 anliegt. Der Verbindungsabschnitt 36 kann ebenfalls einen vertikalen Verlauf aufweisen, so dass er eine Abstützung gegen die Behälterwand 101 bildet. Vorzugsweise ist der Verbindungsabschnitt 36 in gleicher Weise in vertikaler Richtung geteilt wie auch der Handgriff 12 selbst, so dass beide Teilkörper 121, 122 jeweils aus einer Handgriffhälfte und einer Verbindungsabschnitthälfte bestehen.

Die Verbindung zwischen Handgriff 12 und Behälter 10 ist anhand der Figur 3 gut erkennbar. Im gezeigten Ausführungsbeispiel schmiegt sich ein schildartiger oberer Bereich des Handgriffs 12 an die Behälterwand 101 an und verkleidet damit die Verbindungsstelle 20 zum Behälter 10. Dieser weise eine mit dem Verbindungsabschnitt 36 korrespondierende Aufnahmemulde 38 auf, die einen weitgehend bündigen Übergang der Behälterwand 101 mit dem Verbindungsabschnitt 36 ermöglicht.

Vorzugsweise sind innerhalb der Aufnahmemulde 38 geeignete Befestigungsmittel angeordnet, die mit entsprechenden Einrichtungen an der zur Behälterwand 101 weisenden Seite des Verbindungsabschnitts 36 korrespondieren, so dass bspw. eine Rast- oder Schnappverbindung des Verbindungsabschnitts 36 mit dem Behälter 10 ermöglicht ist. Im dargestellten Ausführungsbeispiel sind die Befestigungsmittel jeweils als Rastaufnahmen 40 ausgebildet, in die entsprechende Haken 42 des Verbindungsabschnitts 36 rastend eingreifen können.

Da diese Verbindungsstellen normalerweise nicht ausreichen, um eine ausreichend stabile Fixierung des Handgriffs 12 am Behälter 10 zu gewährleisten, kann das obere Ende 14 des Handgriffs 12 zusätzlich mittels wenigstens einer Verschraubung 44 am Behälter 10 befestigt sein. Diese Verschraubung 44 wird vorzugsweise von der Behälterinnenseite angesetzt und fixiert, so dass der Handgriff 12 in optisch vorteilhafter Weise mit dem Behälter 10 verbunden werden kann, ohne dass von außen irgendwelche Verbindungs- oder Verschraubungsstellen sichtbar sind.

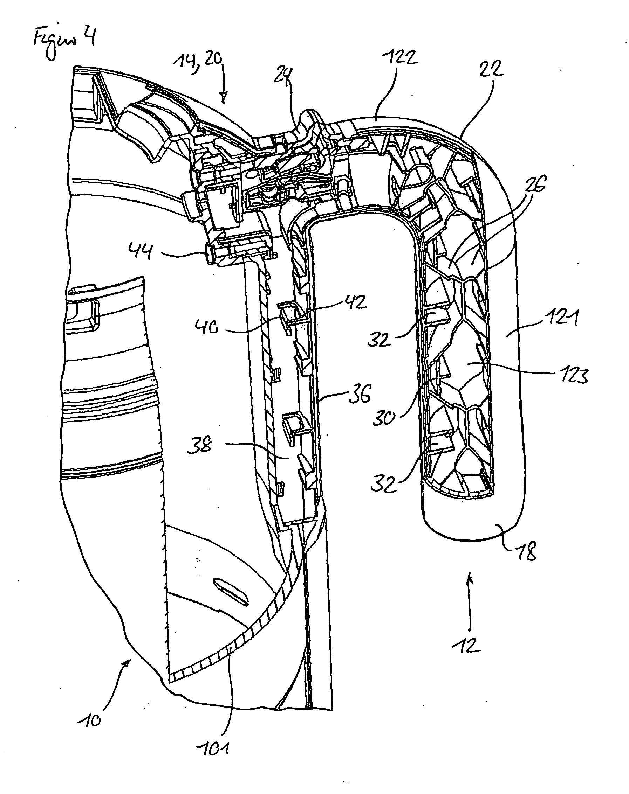

Figur 4 verdeutlicht in einem perspektivischen Teilschnitt die Verbindung zwischen den beiden Teilkörpern 121, 122 des Handgriffs 12 sowie dessen Fixierung am Behälter 10. Im Bereich der Aufnahmemulde 38 ist die Behälterwand 101 nach innen gewölbt, so dass der Verbindungsabschnitt 36 des Handgriffs 12 weitgehend bündig mit der äußeren Behälterwand 101 abschließen kann.

Erkennbar sind weiterhin die sich über den gesamten Hohlraum 123 des Handgriffs 12 erstreckenden Verstrebungen 26 in Form von miteinander verbundenen und ineinander übergehenden fachwerk- bzw. gitternetzartigen Stegen.

Die Stabilität der besonders hoch auf Biegung belasteten Verbindungsstelle 20 wird einerseits durch die nach unten abstützende Wirkung des Verbindungsabschnitts 36 und weiterhin durch die stabile Verschraubung 44 gewährleistet. Die Verstrebungen 26 erstrecken sich aus Gründen der besseren Biegesteifigkeit vorzugsweise bis in den Bereich des Schalters 24, wobei für diesen ggf. entsprechende Aussparungen in der Verstrebung vorzusehen sind.

Behälter 10 und Handgriff 12 können aus Kunststoff bestehen, der bspw. mittels Spritzgießverfahren verarbeitet werden kann. Der Handgriff 12 kann jedoch auch aus Metall, bspw. aus Leichtmetall wie einer Aluminium- und/oder Magnesiumlegierung bestehen, womit sich besonders vorteilhafte gestalterische Wirkungen erzielen lassen. Der erfindungsgemäße Handgriff eignet sich in besonderer Weise zur Verwendung innerhalb einer Geräteserie mit weitgehend gleichen optischen Stilmitteln. Ggf. kann der Handgriff sogar für unterschiedliche Geräte einer solchen Serie verwendet werden.

### Bezugszeichenliste

- 8: Wasserkocher
- 10: Behälter
101 Behälterwand
- 12: Handgriff
121 erster Teilkörper
122 zweiter Teilkörper
123 Hohlraum
- 14: oberes Ende
- 16: oberer Bereich
- 18: freies Ende
- 20: Verbindungsstelle
- 22: gekrümmter Abschnitt
- 24: Schalter
- 26: Verstrebung
- 30: Rasthaken
- 32: Aufnahme
- 36: Verbindungsabschnitt
- 38: Aufnahmemulde
- 40: Rastaufnahme
- 42: Haken
- 44: Verschraubung

## Patentansprüche

1. Handgriff eines Haushaltsgeräts bzw. für ein Haushaltsgerät, insbesondere für einen Behälter (10) für Flüssigkeiten, der eine vertikale Längserstreckungsrichtung und ein im Wesentliches hohles, geschlossenes und in vertikaler Richtung geteiltes Griffteil aufweist, das einen ersten Teilkörper (121) und einen zweiten Teilkörper (122) umfasst, die miteinander verbindbar sind, und der zumindest mit einem oberen Ende (14) an einer äußeren Behälterwand (101) befestigt ist, **dadurch gekennzeichnet, dass** der innere Hohlraum (103) des Griffteils versteifende Verstrebungen (26) aufweist.

2. Handgriff nach Anspruch 1, **dadurch gekennzeichnet, dass** die beiden Teilkörper (121, 122) fest miteinander verrastbar sind.

3. Handgriff nach Anspruch 1 oder 2, **dadurch gekennzeichnet, dass** die beiden Teilkörper (121, 122) über wenigstens zwei Rastverbindungen miteinander verrastbar sind.

4. Handgriff nach einem der voranstehenden Ansprüche, **dadurch gekennzeichnet, dass** jeweils ein Rasthaken (30) eines Teilkörpers (121 bzw. 122) in eine damit korrespondierende Aufnahme (32) des jeweils anderen Teilkörpers (122 bzw. 121) formschlüssig eingreift.

5. Handgriff nach einem der voranstehenden Ansprüche, **dadurch gekennzeichnet, dass** die beiden Teilkörper (121, 122) im miteinander verrasteten Zustand formschlüssig und kraftschlüssig miteinander verbunden sind.

6. Handgriff nach einem der voranstehenden Ansprüche, **dadurch gekennzeichnet, dass** die beiden Teilkörper (121, 122) jeweils über wenigstens eine Schraubverbindung (44) an der äußeren Behälterwand (101) fixierbar sind.

7. Handgriff nach einem der voranstehenden Ansprüche, **dadurch gekennzeichnet, dass** der Handgriff (12) mit seinem oberen Ende (14) an der äußeren Behälterwand (101) fixierbar ist und ein unteres freies Ende (18) aufweist.

8. Handgriff nach einem der voranstehenden Ansprüche, **dadurch gekennzeichnet, dass** die beiden Teilkörper (121, 122) jeweils einen Verbindungsabschnitt (36) aufweisen, und dass diese im montierten Zustand des Handgriffs (12) formschlüssig ineinander greifen.

9. Handgriff nach Anspruch 8, **dadurch gekennzeichnet, dass** der längliche Verbindungsabschnitt (36) bündig mit der Außenwand (101) des Behälters (10) verbindbar ist.

10. Handgriff nach Anspruch 8 oder 9, **dadurch gekennzeichnet, dass** der Verbindungsabschnitt (36) eine vertikale Längserstreckungsrichtung aufweist.

11. Handgriff nach einem der Ansprüche 8 bis 10, **dadurch gekennzeichnet, dass** der Verbindungsabschnitt (36) eine Abstützung des Handgriffs (12) gegen die Behälterwand (101) bildet.

12. Handgriff nach einem der voranstehenden Ansprüche, **dadurch gekennzeichnet, dass** der Handgriff (12) aus Kunststoff oder aus Leichtmetall besteht.

## Claims

1. Handle of a domestic appliance or for a domestic appliance, particularly for a container (10) for liquids, which has a vertical length direction and a substantially hollow, closed grip part, which is divided in vertical direction and comprises a first part body (121) and a second part body (122), which are connectible together, and is fastened at least by an upper end (14) to an outer container wall (101), **characterised in that** the inner cavity (103) of the grip part has reinforcing struts (26).

2. Handle according to claim 1, **characterised in that** the two part bodies (121, 122) are fixedly detentable together.

3. Handle according to claim 1 or 2, **characterised in that** the two part bodies (121, 122) are detentable together by way of at least two detent connections.

4. Handle according to one of the preceding claims, **characterised in that** in each instance a detent hook (30) of a part body (121 or 122) mechanically positively engages in a receptacle (32), which corresponds therewith, of the respective other part body (122 or 121).

5. Handle according to one of the preceding claims, **characterised in that** the two part bodies (121, 122) are connected together in mechanically positive and force-locking manner in the state of being detented together.

6. Handle according to one of the preceding claims, **characterised in that** the two part bodies (121, 122) are each fixable to the outer container wall (101) by way of at least one screw connection (44).

7. Handle according to one of the preceding claims, **characterised in that** the handle (12) is fixable by its upper end (14) to the outer container wall (101) and has a lower free end (18).

8. Handle according to one of the preceding claims, **characterised in that** the two part bodies (121, 122) each have a connecting section (36) and these sections interengage in mechanically positive manner in the mounted state of the handle (12).

9. Handle according to claim 8, **characterised in that** the elongate connecting section (36) is connectible with the outer wall (101) of the container (10) to be flush.

10. Handle according to claim 8 or 9, **characterised in that** the connecting section (26) has a vertical length direction.

11. Handle according to one of claims 8 to 10, **characterised in that** the connecting section (36) forms a support of the handle (12) relative to the container wall (101).

12. Handle according to one of the preceding claims, **characterised in that** the handle (12) consists of plastics material or of light metal.

## Revendications

1. Poignée d'un appareil ménager ou pour un appareil ménager, en particulier pour un récipient (10) destiné à des liquides, qui présente une direction d'extension longitudinale verticale et une partie de poignée sensiblement creuse, fermée et divisée dans le sens vertical, qui comprend un premier corps partiel (121) et un second corps partiel (122), qui peuvent être reliés l'un à l'autre, et qui est fixée au moins par une extrémité (14) supérieure sur une paroi de récipient (101) extérieure, **caractérisée en ce que** la cavité (103) intérieure de la partie de poignée présente des entretoises (26) de renfort.

2. Poignée selon la revendication 1, **caractérisée en ce que** les deux corps partiels (121, 122) peuvent être encliquetés de façon fixe l'un avec l'autre.

3. Poignée selon la revendication 1 ou 2, **caractérisée en ce que** les deux corps partiels (121, 122) peuvent être encliquetés l'un avec l'autre au moyen d'au moins deux liaisons d'encliquetage.

4. Poignée selon l'une quelconque des revendications précédentes, **caractérisée en ce que** respectivement un crochet d'encliquetage (30) d'un corps partiel (121 resp. 122) s'engage par conjugaison de forme dans un logement (32) correspondant à celui-ci, de l'autre corps partiel (122 resp. 121) respectif.

5. Poignée selon l'une quelconque des revendications précédentes, **caractérisée en ce que** les deux corps partiels (121, 122) sont reliés entre eux par conjugaison de forme et par adhérence lorsqu'ils sont encliquetés l'un avec l'autre.

6. Poignée selon l'une quelconque des revendications précédentes, **caractérisée en ce que** les deux corps partiels (121, 122) peuvent être fixés sur la paroi de récipient (101) extérieure respectivement au moyen d'au moins un assemblage vissé (44).

7. Poignée selon l'une quelconque des revendications précédentes, **caractérisée en ce que** la poignée (12) peut être fixée par son extrémité (14) supérieure sur la paroi de récipient (101) extérieure et présente une extrémité (18) libre inférieure.

8. Poignée selon l'une quelconque des revendications précédentes, **caractérisée en ce que** les deux corps partiels (121, 122) présentent respectivement une partie de liaison (36) et **en ce que** ces corps s'engagent par conjugaison de forme l'un dans l'autre lorsque la poignée (12) est montée.

9. Poignée selon la revendication 8, **caractérisée en ce que** la partie de liaison (36) allongée peut être reliée de manière affleurée avec la paroi extérieure (101) du récipient (10).

10. Poignée selon la revendication 8 ou 9, **caractérisée en ce que** la partie de liaison (36) présente une direction d'extension longitudinale verticale.

11. Poignée selon l'une quelconque des revendications 8 à 10, **caractérisée en ce que** la partie de liaison (36) forme un soutien de la poignée (12) contre la paroi de récipient (101).

12. Poignée selon l'une quelconque des revendications précédentes, **caractérisée en ce que** la poignée (12) est en plastique ou en métal léger.
